# DEMANDE DE BREVET EUROPEEN

(11) **EP 1 586 443 A2**
(43) Date de publication de la demande: **19.10.2005**
(21) Numéro de dépôt: 05290857.1
(22) Date de dépôt: 18.04.2005
(51) Int. Cl.: B32B 7/02, F16L 59/02, F02B 77/11, F01N 7/08, G10K 11/168

(54) **Dispositif de protection thermique et acoustique**

(30) Priorité: 16.04.2004 FR 0404065
(71) Demandeur: Centre d'Etude et de Recherche pour l'Automobile ( CERA), 51100 Reims (FR)
(72) Inventeur: Merrien, Raphael, 51100 Reims (FR)
(74) Mandataire: Sayettat, Julien Christian

(57) **Abrégé**

L'invention concerne un dispositif (1) de protection thermique et acoustique vis à vis d'un élément (2) susceptible d'émettre de la chaleur et du bruit, ledit dispositif comprenant au moins une paroi interne (3) souple et une paroi externe (4), ladite paroi interne étant destinée à être disposée en regard de l'élément (2), ledit dispositif comprenant en outre une couche intermédiaire (5) souple et poreuse présentant des propriétés d'absorption acoustique et d'isolation thermique, ladite couche intermédiaire étant disposée entre la paroi interne (3) et la paroi externe (4), ledit dispositif comprenant des moyens de fixation, la paroi interne (3) comprenant des ouvertures permettant le passage des ondes sonores vers la couche intermédiaire (5).

L'invention concerne également un ensemble protégé thermiquement comprenant un tel dispositif (1).

## Description

L'invention concerne un dispositif de protection thermique et acoustique vis à vis d'un élément susceptible d'émettre de la chaleur et du bruit ainsi qu'un ensemble protégé thermiquement comprenant un tel dispositif et un élément susceptible d'émettre de la chaleur et du bruit.

Dans une application particulière, l'élément est formé par au moins une partie d'une ligne d'échappement d'un véhicule automobile. La ligne d'échappement, s'étendant typiquement du collecteur au pot de détente, est une source de chaleur. De plus, la ligne d'échappement peut émettre des bruits. Par ailleurs, elle est soumise à d'importantes vibrations dues au fonctionnement du moteur.

Il est connu, dans le domaine de l'automobile, de protéger les éléments fragiles disposés à proximité d'une source de chaleur et d'absorber les bruits émis par cette source au moyen d'un écran rigide comprenant une couche poreuse, isolant thermique et absorbant acoustique, disposée entre une structure rigide formant paroi externe, par exemple une tôle emboutie, et une paroi interne dirigée vers la source chaude.

Afin de favoriser l'absorption des ondes sonores émises par la source, la paroi interne peut être pourvue d'ouvertures, par exemple sous forme de perforations, aptes à permettre la propagation des ondes sonores au sein de la couche poreuse et leur atténuation par absorption.

De tels écrans présentent plusieurs inconvénients. Tout d'abord, leur fabrication nécessite des étapes d'emboutissage de l'écran afin de le mettre en forme et d'adapter sa géométrie à l'environnement dans lequel il doit être installé.

D'autre part, ces écrans sont fixés sur un support, par exemple la ligne d'échappement ou bien un composant à protéger de la chaleur, usuellement par le biais de moyens de fixation traversant les écrans au travers d'orifices prévus à cette fin. De tels orifices présentent l'inconvénient de constituer des fuites thermiques et acoustiques. De plus, du fait de la rigidité des écrans, les vibrations engendrées par la ligne d'échappement peuvent réduire l'efficacité des moyens de fixation qui sont sujets à l'usure, voire à décrochement du support.

Par ailleurs, il est connu de réaliser pour des domaines tels que le bâtiment, l'aéronautique, etc., des protection thermiques souples comprenant des parois interne et externe entre lesquelles est disposée une couche poreuse. De telles protections entourent sensiblement l'élément susceptible d'émettre de la chaleur afin de confiner la chaleur et d'empêcher des fuites thermiques vers l'environnement extérieur.

Cependant, de telles protections ne permettent pas d'absorber les ondes sonores éventuellement émises par cet élément.

Des dispositifs de protection thermique souple sont également connus pour l'industrie automobile. Cependant, les différentes couches de ces dispositifs sont associées les unes aux autres de façon complexe, par exemple au moyen de colles ce qui peut réduire l'efficacité du dispositif.

L'invention vise à pallier ces inconvénients en proposant un dispositif de protection thermique et acoustique souple permettant de confiner la chaleur et le bruit autour de leur source, ne nécessitant pas de mise en forme ni d'étapes d'association des couches complexes et fixés de façon fiable en regard de l'élément susceptible d'émettre de la chaleur et du bruit.

A cet effet et selon un premier aspect, l'invention concerne un dispositif de protection thermique et acoustique vis à vis d'un élément susceptible d'émettre de la chaleur et du bruit, ledit dispositif comprenant au moins une paroi interne et une paroi externe souples, ladite paroi interne étant destinée à être disposée en regard de l'élément, ledit dispositif comprenant en outre une couche intermédiaire souple et poreuse présentant des propriétés d'absorption acoustique et d'isolation thermique, ladite couche intermédiaire étant disposée entre la paroi interne et la paroi externe, ledit dispositif comprenant des moyens de fixation, la paroi interne comprenant des ouvertures permettant le passage des ondes sonores vers la couche intermédiaire, les parois interne et externe ainsi que la couche intermédiaire sont associées les unes aux autres par couture au moyen d'un fil.

Ainsi, le dispositif entoure sensiblement l'élément, ce qui permet de confiner la chaleur et le bruit émis par celui-ci. De plus, la présence d'ouvertures dans la paroi interne permet une absorption efficace du bruit émis par l'élément. D'autre part, du fait de sa souplesse, aucune étape d'emboutissage n'est nécessaire à sa fabrication. L'association des couches par couture est particulièrement simple et peut permettre de réaliser les ouvertures dans la paroi interne.

Selon un deuxième aspect, l'invention concerne un ensemble protégé thermiquement comprenant un élément susceptible d'émettre de la chaleur et du bruit et un dispositif tel que décrit ci-dessus, ledit dispositif étant disposé sensiblement autour de l'élément.

Dans une application particulière, l'élément est formé par au moins une partie d'une ligne d'échappement de véhicule automobile.

D'autres objets et avantages de l'invention apparaîtront au cours de la description qui suit, faite en référence aux dessins annexés.

La figure 1 est une représentation schématique en coupe d'un dispositif de protection selon l'invention, ledit dispositif étant agencé autour d'un élément susceptible d'émettre de la chaleur et du bruit.

La figure 2 est une représentation schématique en perspective d'une partie d'une ligne d'échappement d'un véhicule automobile.

La figure 3 est une représentation schématique en perspective d'un ensemble protégé thermiquement comprenant la partie de ligne d'échappement de la figure 2 autour de laquelle un dispositif selon l'invention est agencé.

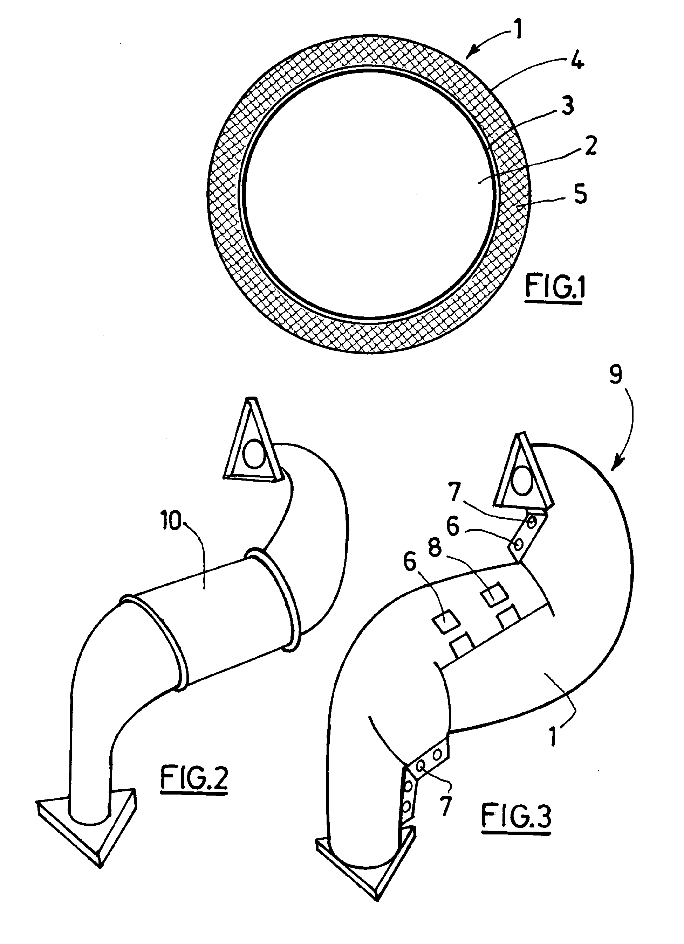

En référence à la figure 1, un dispositif 1 de protection thermique et acoustique vis à vis d'un élément 2 susceptible d'émettre de la chaleur et du bruit comprend au moins une paroi interne 3 et une paroi externe 4 ainsi qu'une couche intermédiaire 5 disposée entre la paroi interne 3 et la paroi externe 4.

La paroi interne 3 est souple. Elle est par exemple réalisée en un tissu de verre ou de silice. Le tissu de verre est plus particulièrement adapté pour des températures allant jusqu'à 550°C tandis que la silice est plus adaptée pour des températures allant jusqu'à 1100°C.

Selon une réalisation, la paroi interne peut également être apte à réfléchir la chaleur. Dans ce cas, elle peut être réalisée en un matériau métallique ou en tissu de verre ou de silice comprenant en outre un matériau métallique.

La paroi interne 3 est destinée à être disposée en regard de l'élément 2, par exemple au contact de la paroi extérieure de celui-ci. La paroi interne 3 comprend des ouvertures (non représentées) de sorte à permettre la propagation des ondes sonores au sein de la couche intermédiaire 5 et leur atténuation par absorption.

Les ouvertures peuvent être réalisées par des perforations dans la paroi interne 3. Selon une variante, la paroi interne 3 est poreuse de sorte à comprendre des ouvertures.

La couche intermédiaire 5 est souple et poreuse de sorte à présenter des propriétés d'absorption acoustique et d'isolation thermique. La couche intermédiaire 5 est par exemple réalisée en un feutre de fibres minérales, telles que des fibres de verre (températures allant jusqu'à 550°C), de basalte ou de laine de roche (températures allant jusqu'à 750°C).

La paroi externe 4 est souple. La paroi externe 4 est par exemple réalisée en un tissu de verre comprenant une enduction. L'enduction peut être en téflon pour des températures allant jusqu'à 250°C. En variante, le tissu de verre peut être associé à une feuille métallique telle qu'une feuille d'aluminium pour des températures allant jusqu'à 600°C.

Selon une réalisation, la paroi externe 4 peut être apte à réfléchir la chaleur en provenance de l'élément 2 et à en limiter la sortie vers l'environnement extérieur de l'élément 2. Dans ce cas, on prévoit que la paroi externe 4 soit pourvue d'un matériau métallique.

L'enduction ou la feuille d'aluminium permettent de rendre la paroi externe 4 étanche et d'assurer une protection du dispositif 1 vis à vis des fluides, poussières et gravillons. De plus, cette étanchéité améliore encore les propriétés d'isolation thermique du dispositif 1.

Dans un mode de réalisation, les parois interne 3 et externe 4 et la couche intermédiaire 5 sont associées les unes aux autres par un couture réalisée au moyen d'un fil comprenant par exemple un mélange de fibres de silice et d'inox présentant des caractéristiques de résistance à la chaleur adaptées.

De plus dans un mode de réalisation dans lequel les ouvertures de la paroi interne sont réalisées par des perforations, la paroi interne 3 et la couche intermédiaire 5 sont co-aiguilletées. Ce co-aiguilletage permet de réaliser des perforations dans la paroi interne 3 avec un taux de perforation adapté au passage des ondes sonores et à la protection thermique vis à vis de l'élément 2.

Selon une réalisation, le dispositif 1 comprend un espaceur (non représenté), agencé pour écarter la paroi interne 3 de l'élément 2. Ainsi, la paroi interne peut réfléchir la chaleur émise par l'élément 2. Un tel espaceur comprend par exemple une grille agencée entre la paroi interne 3 et l'élément 2. La grille est prévue pour résister aux températures de l'élément 2 et peut par exemple être réalisée en verre ou en silice.

Le dispositif 1, lorsqu'il n'est pas disposé autour d'un élément 2, se présente à plat et est susceptible d'être replié sur lui-même du fait de sa souplesse. Ainsi, aucune étape d'emboutissage pour le mettre en forme n'est nécessaire.

Le dispositif 1 comprend des moyens de fixations 6.

Selon une réalisation, ces moyens de fixation 6 permettent de fermer le dispositif 1 sur lui-même de sorte à former un manchon autour de l'élément 2, comme cela est représenté sur la figure 3. On prévoit par exemple des bandes auto-agrippantes disposées dans des parties extrêmes du dispositif 1 destinées à être en regard l'une de l'autre lorsque le dispositif est disposé autour d'un élément 2. De la même manière on peut prévoir des boutons pression 7 ou des sangles 8 comme cela est représenté sur la figure 3. Les moyens de fixation 6 peuvent être répartis le long du dispositif 1 de sorte à assurer une fermeture efficace du dispositif 1 sur lui-même.

Dans une telle réalisation, le dispositif 1 forme un manchon autour de l'élément 2, assurant ainsi une protection acoustique et thermique optimisée.

Selon une autre réalisation, en raison de contraintes d'encombrement de l'environnement du dispositif 1 monté sur l'élément 2, on peut prévoir que le dispositif 1 n'entoure pas complètement l'élément 2. Dans ce cas, les moyens de fixation 6 sont destinés à coopérer avec des moyens de fixation réciproques (non représentés) prévus dans l'environnement extérieur du dispositif 1. Ces moyens de fixation réciproques peuvent notamment être prévus sur l'élément 2. Les moyens de fixation 6 comprennent alors par exemple des crochets prévus pour s'engager dans les moyens de fixation réciproques de l'environnement du dispositif 1 ou des boutons prévus pour s'engager dans des supports correspondant de l'environnement du dispositif 1. Il est à noter que ces moyens de fixation 6 ne traversent pas le dispositif 1, ce qui évite les fuites acoustiques et thermiques au niveau de ces moyens de fixation.

Le dispositif 1 présente une géométrie agencée pour enserrer l'élément 2, lorsqu'il est disposé autour de celui-ci. Ainsi, pour un élément 2 sensiblement cylindrique, le dispositif 1 présente une forme sensiblement cylindrique lorsqu'il est disposé autour de l'élément 2.

D'une manière générale, le dispositif 1 présente une géométrie sensiblement complémentaire de celle de l'élément 2 lorsqu'il est disposé sur l'élément 2, comme on peut le constater en comparant les figures 2 et 3.

Un ensemble 9 protégé thermiquement est ainsi formé. Un tel ensemble 9 comprend un élément 2 susceptible d'émettre de la chaleur et du bruit et un dispositif 1 tel que décrit ci-dessus. Dans la réalisation représentée sur la figure 3, le dispositif 1 est disposé autour de l'élément 2 et fermé sur lui-même autour de celui-ci de sorte à former un manchon.

Selon une réalisation, l'ensemble 9 peut comprendre une pluralité de dispositifs de protection thermique et acoustique 1, disposés les uns à côté des autres de sorte à entourer sensiblement la totalité de l'élément 2. Cela est particulièrement utile lorsque l'élément 2 présente une longueur importante ou une forme particulièrement complexe. Les dispositifs 1 sont alors associés les uns aux autres par couture.

Dans une application particulière, l'élément 2 est formé par une partie 10 de ligne d'échappement d'un véhicule automobile comme représenté sur la figure 2. Une telle partie 10 est par exemple un pot précatalytique.

Dans ce cas et selon une réalisation non représentée, le dispositif 1 peut comprendre des moyens de chauffage destinés à permettre un réchauffement rapide des gaz d'échappement du véhicule, ceci afin d'améliorer le fonctionnement du pot précatalytique dès le début d'utilisation du véhicule. Ces moyens sont par exemple formés par des résistances électriques.

D'autres applications peuvent être envisagées, ainsi l'élément 2 peut être formé par tout organe d'un véhicule automobile susceptible de générer de la chaleur et du bruit. D'une manière générale, le dispositif peut être disposé sur tout élément susceptible de générer de la chaleur et du bruit que l'on veut confiner.

## Revendications

1. Dispositif (1) de protection thermique et acoustique vis à vis d'un élément (2) susceptible d'émettre de la chaleur et du bruit, ledit dispositif comprenant au moins une paroi interne (3) et une paroi externe (4) souples, ladite paroi interne étant destinée à être disposée en regard de l'élément (2), ledit dispositif comprenant en outre une couche intermédiaire (5) souple et poreuse présentant des propriétés d'absorption acoustique et d'isolation thermique, ladite couche intermédiaire étant disposée entre la paroi interne (3) et la paroi externe (4), ledit dispositif comprenant des moyens de fixation (6), la paroi interne (3) comprenant des ouvertures permettant le passage des ondes sonores vers la couche intermédiaire (5), ledit dispositif étant **caractérisé en ce que** les parois interne (3) et externe (4) ainsi que la couche intermédiaire (5) sont associées les unes aux autres par couture au moyen d'un fil.

2. Dispositif selon la revendication 1, **caractérisé en ce que** les ouvertures sont formées par des perforations dans la paroi interne (3).

3. Dispositif selon la revendication 1 ou 2, **caractérisé en ce que** la paroi interne (3) est poreuse de sorte à comprendre des ouvertures.

4. Dispositif selon l'une quelconque des revendications 1 à 3, **caractérisé en ce que** les parois interne (3) et/ou externe (4) sont aptes à réfléchir la chaleur.

5. Dispositif selon l'une quelconque des revendications 1 à 4, **caractérisé en ce que** les moyens de fixation (6) permettent de fermer le dispositif (1) sur lui-même de sorte à former un manchon autour de l'élément (2), les moyens de fixation étant formés par des bandes auto-agrippantes et/ou par des sangles (8) et/ou par des boutons pression (7) répartis le long du dispositif.

6. Dispositif selon l'une quelconque des revendications 1 à 5, **caractérisé en ce que** les moyens de fixation (6) sont destinés à coopérer avec des moyens de fixation réciproques prévus dans l'environnement extérieur du dispositif (1), notamment sur l'élément (2).

7. Dispositif selon l'une quelconque des revendications 1 à 6, **caractérisé en ce qu'**il présente une géométrie agencée pour enserrer l'élément (2) lorsqu'il est disposé sensiblement autour de celui-ci.

8. Dispositif selon l'une quelconque des revendications 1 à 7, **caractérisé en ce que** la couche intermédiaire (5) est réalisée en un feutre de fibres minérales, telles que des fibres de verre, de basalte ou de laine de roche.

9. Dispositif selon l'une quelconque des revendications 1 à 8, **caractérisé en ce que** la paroi interne (3) est réalisée en un tissu de verre ou de silice.

10. Dispositif selon l'une quelconque des revendications 1 à 9, **caractérisé en ce que** la paroi externe (4) est réalisée en un tissu de verre comprenant une enduction ou étant associée à une feuille métallique.

11. Dispositif selon l'une quelconque des revendications 1 à 10, **caractérisé en ce que** ledit fil comprend un mélange de fibres de silice et d'inox.

12. Dispositif selon l'une quelconque des revendications 1 à 11, **caractérisé en ce que** la paroi interne (3) et la couche intermédiaire (5) sont co-aiguilletées, le co-aiguilletage réalisant des ouvertures dans la paroi interne (3).

13. Dispositif selon l'une quelconque des revendications 1 à 12, **caractérisé ce qu'**il comprend un espaceur agencé pour écarter la paroi interne (3) de l'élément (2).

14. Dispositif selon l'une quelconque des revendications 1 à 13, **caractérisé en ce qu'**il comprend des moyens de chauffage, notamment sous forme de résistances électriques.

15. Ensemble (9) protégé thermiquement, **caractérisé en ce qu'**il comprend un élément (2) susceptible d'émettre de la chaleur et du bruit et au moins un dispositif (1) selon l'une quelconque des revendications 1 à 14, ledit dispositif étant disposé sensiblement autour de l'élément (2).

16. Ensemble selon la revendication 15, **caractérisé en ce que** l'élément (2) est formé par au moins une partie (10) d'une ligne d'échappement d'un véhicule automobile.

17. Ensemble selon la revendication 15 ou 16, **caractérisé en ce qu'**il comprend une pluralité de dispositifs de protection thermique et acoustique (1), disposés les uns à côté des autres de sorte à entourer sensiblement la totalité de l'élément (2), lesdits dispositifs étant associés les uns aux autres par couture.
